# FASCICULE DE BREVET EUROPEEN

(11) **EP 2 526 407 B1**
(45) Date de publication et mention de la délivrance du brevet: **27.11.2013**
(21) Numéro de dépôt: 11703160.9
(22) Date de dépôt: 18.01.2011
(51) Int. Cl.: G01N 21/65

(54) **Méthode pour la détection d'un signal optique non linéaire résonant et dispositif pour la mise en oeuvre de ladite méthode**
Verfahren zur Erkennung eines resonanten nichtlinearen optischen Signals und Vorrichtung zur Umsetzung dieses Verfahrens
Method for detecting a resonant nonlinear optical signal and device for implementing said method

(30) Priorité: 22.01.2010 FR 1000245
(43) Date de publication de la demande: 28.11.2012
(73) Titulaire: Centre National de la Recherche Scientifique CNRS, 75794 Paris Cedex 16 (FR)
(72) Inventeur: RIGNEAULT, Hervé, F-13190 Allauch (FR); GACHET, David, F-26760 Beaumont-Les-Valence (FR); BRUSTLEIN, Sophie, F-13006 Marseille (FR); BILLARD, Franck, F-21000 Dijon (FR)
(74) Mandataire: Osha Liang SARL
(86) Numéro de dépôt international: PCT/EP2011/050619
(87) Numéro de publication internationale: WO 2011/089118

(56) Documents cités:
- GB-A- 1 171 689
- US-A1- 2007 121 119
- US-B1- 6 169 289
- US-B1- 6 614 532
- GACHET D ET AL: "Focused field symmetries for background-free coherent anti-Stokes Raman spectroscopy", PHYSICAL REVIEW A (ATOMIC, MOLECULAR, AND OPTICAL PHYSICS) AMERICAN PHYSICAL SOCIETY THROUGH AIP USA, vol. 77, no. 6, juin 2008 (2008-06), XP002598896, ISSN: 1050-2947 cité dans la demande
- SCHIE I W ET AL: "Simultaneous forward and epi-CARS microscopy with a single detector by time-correlated single photon counting", OPTICS EXPRESS 20080204 OPTICAL SOCIETY OF AMERICA US, vol. 16, no. 3, 4 février 2008 (2008-02-04), pages 2168-2175, XP002598897, DOI: DOI:10.1364/OE.16.002168

## Description

### ETAT DE L'ART

### Domaine technique de l'invention

La présente invention concerne une méthode pour la détection d'un signal optique non linéaire résonant et un dispositif pour la mise en oeuvre de ladite méthode. Elle s'applique notamment à la détection de signaux diffusés CARS.

### Etat de l'art

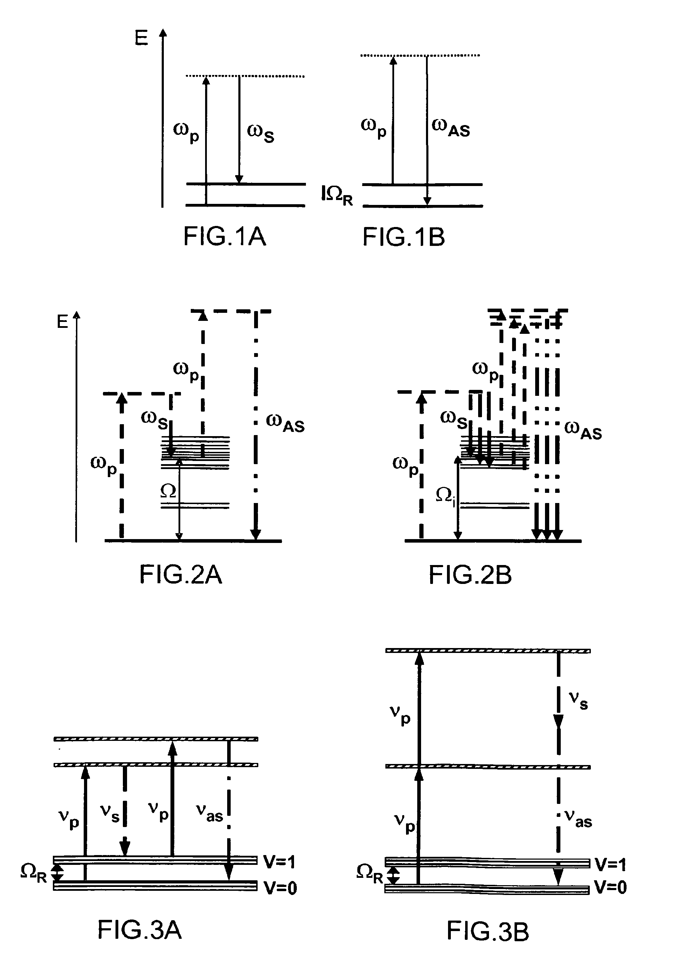

Toutes les liaisons chimiques possèdent des fréquences de vibration qui leur sont propres. On appelle techniques optiques vibrationnelles des méthodes qui visent à utiliser l'interaction lumière/matière pour obtenir des informations sur ces vibrations moléculaires. La plus connue de ces techniques est la spectroscopie infrarouge (IR) qui observe les raies d'absorption spécifiques des liaisons chimiques présentes dans un échantillon. Découverte en 1928, la diffusion Raman (du nom du physicien Chandrasekhara Venkata Raman qui découvrit l'effet) permet d'utiliser la lumière visible pour accéder au spectre vibrationnel des molécules qui interagissent avec un faisceau lumineux. Dans un processus de diffusion Raman, une onde pompe de pulsation ω_{P} incidente sur une molécule est diffusée inélastiquement en une onde dite Stokes de pulsation ω_{S} (Figure 1A) et une onde dite anti-Stokes de pulsation ω_{AS} (Figure 1B). L'écart en fréquence entre les ondes générées et l'onde pompe dépend de la transition Raman moléculaire (de pulsation Ω_{R}) de telle sorte que ωₚ-ωₛ=ωₐₛ-ω_{p˙}=Ω_{R}. Dans une vision photonique du processus, les ondes Stokes et anti-Stokes correspondent à une absorption à partir respectivement du niveau vibrationnel fondamental ou excité. Le processus générant l'onde anti-Stokes, partant du niveau vibrationnel excité (B), est beaucoup moins probable que le processus créant l'onde Stokes, qui est la seule observée dans la pratique en spectroscopie Raman spontanée. Une étude fine de la répartition spectrale des ondes Stokes renseigne sur les densités de liaisons chimiques présentes dans l'échantillon. Ce processus spontané de diffusion inélastique est très peu efficace comparé à la fluorescence (les sections efficaces Raman sont de l'ordre de 10⁻³⁰ cm² /molécule, à comparer avec la section efficace d'absorption à 1 photon d'un fluorophore qui atteint 10⁻¹⁶ cm² /molécule).

La spectroscopie Raman stimulée CARS (pour Coherent Anti-Stokes Raman Scattering) est un processus de mélange à quatre ondes qui permet d'adresser les liaisons vibrationnelles présentes dans un échantillon. Ce processus est par exemple décrit dans R.W. Boyd, Nonlinear Optics (Academic Press, Boston, 1992). Il s'agit d'envoyer deux impulsions lasers de pulsations ωₚ et ωₛ (ou fréquences vₚ et vₛ) dont la différence de pulsations est rendue égale à la pulsation Ω du niveau vibrationnel que l'on veut adresser. Dans cette configuration de résonance ωₚ-ωₛ = Ω, le niveau vibrationnel de pulsation Ω est peuplé de manière stimulée et va pouvoir diffuser inélastiquement le faisceau de pulsation ωₚ dans un faisceau de pulsation ωₐₛ = 2 ωₚ -ωₛ (Figure 2A). La présence de cette nouvelle radiation ωₐₛ est la signature de la présence de la liaison vibrant à la pulsation Ω dans l'échantillon. Une première mise en oeuvre de CARS consiste à envoyer sur l'échantillon deux impulsions picoseconde fines spectralement dont la différence de pulsations n'adressera qu'une liaison vibrationnelle spécifique. Pour une identification optimale, on recherche l'ensemble des liaisons vibrationnelles présentes dans l'échantillon. Pour cela, on opère en mode dit « Multiplex CARS » (voir par exemple M.Muller et J.Schins, « Imaging the thermodynamic state of lipidic membranes with multiplex CARS spectroscopy », Physical Chemistry B 106, 3715-3723 (2002)) où l'on envoie sur l'échantillon une impulsion ωₚ fine spectralement et une impulsion ωₛ large spectralement (Figure 2B). On peut ainsi adresser l'ensemble des niveaux vibrationnels Ωᵢ présents dans l'échantillon et obtenir un spectre du signal ωₐₛ généré. Du point de vue technique, le spectre étroit est par exemple issu d'un laser picoseconde et le spectre large, par exemple d'un laser femtoseconde, ou d'une fibre à cristal photonique générant un supercontinuum (SC).

Sur la figure 3A, nous décrivons le processus de diffusion CARS résonant, exploité pour avoir accès à la signature des espèces moléculaires que l'on cherche à identifier. Il existe cependant une contribution CARS non résonante, représentée sur la figure 3B, qui provient d'une contribution électronique de l'échantillon. Cette contribution non résonante peut être importante lorsqu'on fait de la spectroscopie CARS sur un échantillon comportant une grande diversité de liaisons chimiques.

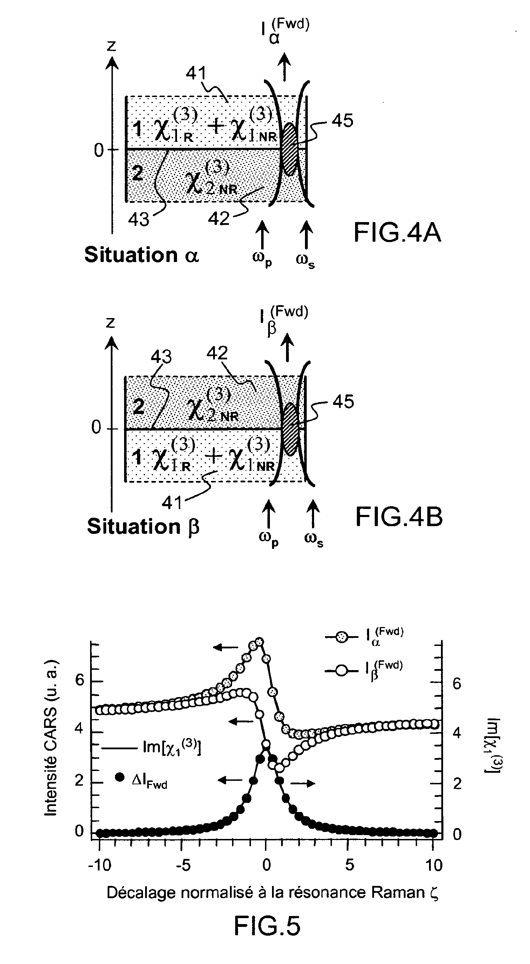

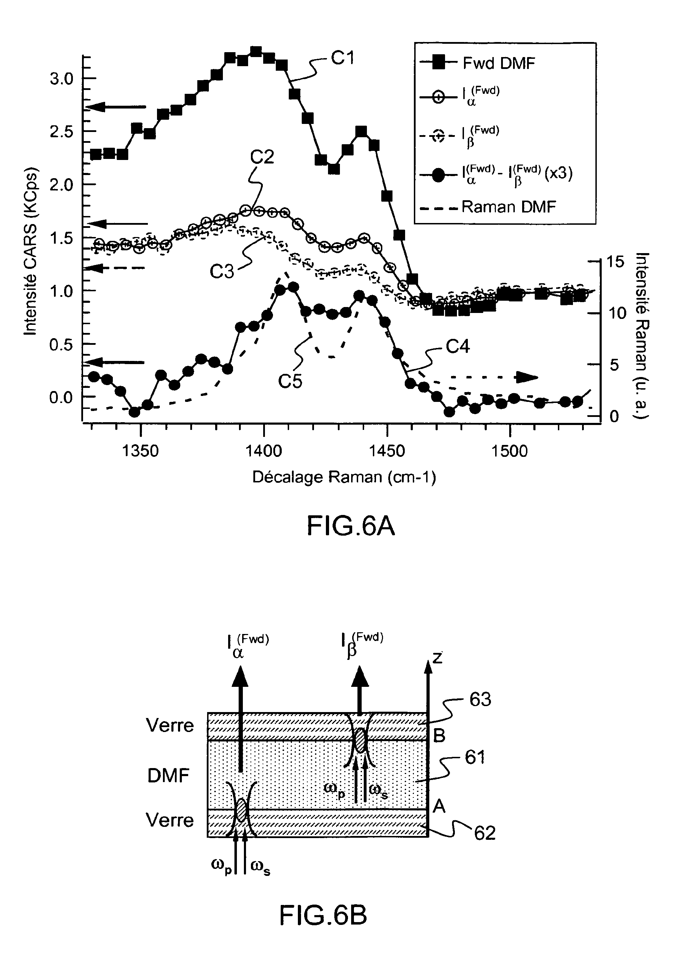

Dans l'article « Focused field symmetries for background-free coherent anti-Stokes Raman spectroscopy », Physical Review A 77 (2008), au nom de D. Gachet et al., une méthode originale est présentée, permettant de s'affranchir de la contribution non résonante. Les figures 4 à 6 illustrent la méthode. La méthode consiste à effectuer une image différentielle CARS entre un objet et son symétrique par rapport à une interface transverse 43 entre un milieu résonant (référence 41 sur les figures 4A et 4B) et un milieu non résonant (référencé 42 sur les figures 4A, 4B). La susceptibilité non linéaire du 3^{ème} ordre est définie dans le milieu résonant 41 par un terme résonant χ⁽³⁾_{1R} et un terme non résonant χ⁽³⁾_{1NR}. Dans le milieu non résonant 42, elle est définie par le terme non résonant χ⁽³⁾_{2NR}. Sur les figures 4A et 4B, est représenté un volume actif CARS 45 (lieu de focalisation des faisceaux pompe et Stokes de pulsations ωₚ et ωₛ respectivement), localisé sur l'interface transverse 43 entre le milieu résonant et le milieu non résonant. Deux situations sont envisagées: le cas α où les faisceaux pompe et Stokes sont incidents du côté du milieu non résonant et le cas β où les faisceaux pompe et Stokes sont incidents du côté du milieu résonant. Il est démontré dans cet article que la différence des signaux CARS obtenus dans les cas α et β ne contient que la contribution résonante du milieu résonant. La figure 5 illustre les résultats d'un calcul numérique prenant en compte la nature vectorielle des faisceaux pompe et Stokes focalisés sur une interface transverse comme illustré sur les figures 4A et 4B. L'analyse consiste à étudier la différence ΔI_{Fwd} des signaux CARS émis dans les problèmes α (I_{α}(Fwd)) et β (I_{β}(Fwd)) en fonction du paramètre de décalage normalisé à la résonance Raman ζ=(ωₚ-ωₛ-Ω_{R})/Γ (où Γ est la largeur spectrale de la raie vibrationnelle étudiée). Il est démontré que la différence ΔI_{Fwd} suit exactement la partie imaginaire de χ⁽³⁾_{1R} qui est connue pour être le spectre Raman du milieu 1. Une mise en oeuvre expérimentale de la méthode est illustrée sur la figure 6B et des résultats expérimentaux sont présentés sur la figure 6A. La figure 6B représente un échantillon constitué d'une couche 61 de DMF (N,N-diméthylformamide) entre deux lames de verre 62, 63. La situation α correspond au cas où les faisceaux pompe et Stokes sont focalisés sur l'interface verre-DMF (interface entre 62 et 61), tandis que la situation β correspond au cas où les faisceaux d'excitation sont focalisés sur l'interface DMF-verre (interface entre 61 et 63). Sur la figure 6A, sont illustrés en fonction du décalage Raman respectivement par la courbe C1, l'intensité CARS du DMF seul (lorsque les faisceaux d'excitation sont focalisés dans le milieu résonant), par la courbe C2, l'intensité I_{α}(Fwd), par la courbe C3, l'intensité I_{β}(Fwd), par la courbe C4, la différence ΔI_{Fwd} et par la courbe C5 le spectre Raman. Il apparaît, comme cela avait été démontré théoriquement, que la méthode permet de s'affranchir de la composante non résonante qui entache le signal diffusé CARS représenté par la courbe C1.

Cette méthode présente cependant un certain nombre d'inconvénients. Elle est notamment limitée à des échantillons symétriques, tels que celui représenté sur la figure 6B, ou réversibles, afin d'avoir accès aux interfaces résonant/non résonant d'une part et non résonant/résonant d'autre part. Cela présente une limitation dans le cas d'échantillons biologiques qui présentent rarement ces propriétés. Par ailleurs, si elle permet les applications en spectroscopie, cette méthode est limitée pour des applications en microscopie.

Le document US2007/0121119 décrit un exemple de microscopie CARS où, à l'aide d'un système de miroirs, le faisceau pompe est incident sur un échantillon par deux directions opposées. L'interférence résultante des signaux CARS permet d'améliorer la résolution spatiale.

La présente invention propose un dispositif original de détection d'un signal optique non linéaire résonant, basé sur le principe de la détection aux interfaces transverses tel que décrit dans l'art antérieur, mais qui puisse s'appliquer à tout échantillon présentant une interface entre un milieu résonant et un milieu non résonant, à la fois pour des applications de spectroscopie et de microscopie.

### RESUME DE L'INVENTION

Selon un premier aspect, l'invention concerne un dispositif pour la détection d'un signal optique non linéaire résonant induit dans un échantillon de type comprenant un milieu résonant et un milieu non résonant formant une interface, le dispositif comprenant : une source d'émission d'au moins un premier faisceau lumineux d'excitation, dit faisceau pompe, à une première pulsation ωp donnée, adapté à l'excitation du milieu résonant d'un échantillon du type donné, un premier module optique adapté à la détection du signal optique non linéaire résultant de l'interaction dudit faisceau pompe avec l'échantillon lorsque ledit faisceau pompe est incident sur l'échantillon selon un axe optique et intercepte l'échantillon à une position donnée d'une interface transverse entre le milieu résonant et le milieu non résonant de l'échantillon, des moyens de réflexion dudit faisceau pompe, agencés de telle sorte à ce que ledit faisceau pompe ainsi réfléchi intercepte ladite interface transverse sensiblement à la même position que ledit faisceau pompe incident, un deuxième module optique adapté à la détection du signal optique non linéaire résultant de l'interaction dudit faisceau pompe réfléchi avec l'échantillon, un module de traitement des signaux optiques détectés par lesdits premier et second modules de détection, comprenant le calcul d'une différence des signaux détectés, la différence étant caractéristique d'une résonance vibrationnelle ou électronique du milieu résonant.

Selon une variante, la source d'émission permet l'émission d'un faisceau pompe de pulsation ωp et d'un faisceau Stokes de pulsation ωs, le signal optique non linéaire résultant de l'interaction desdits faisceaux pompe et stokes est un signal dit signal diffusé CARS, de pulsation ωas = 2ωp - ωs et la différence des signaux détectés par le premier et le second module de détection est caractéristique d'une résonance Raman du milieu résonant.

Selon une autre variante, le dispositif selon l'invention comprend un objectif de focalisation des faisceaux d'excitation incidents en un volume de focalisation commun, permettant d'intercepter ladite interface entre le milieu résonant et le milieu non résonant et un objectif de collection du signal non linéaire résultant de l'interaction des faisceaux d'excitation incidents avec l'échantillon, ledit objectif de collection étant identique à l'objectif de focalisation des faisceaux incidents et l'objectif de collection formant un objectif de focalisation des faisceaux d'excitation réfléchis et l'objectif de focalisation des faisceaux incidents formant un objectif de collection du signal non linéaire résultant de l'interaction des faisceaux d'excitation réfléchis avec l'échantillon.

Selon une autre variante, chacun des modules de détection optique comprend un dispositif d'enregistrement d'images, le signal optique non linéaire étant collecté dans chacun des modules de détection optique respectivement dans des directions symétriques par rapport à l'axe optique, la différence étant effectuée pour chaque couple de signaux ainsi détectés.

Selon une autre variante, un dispositif de balayage angulaire des faisceaux d'excitation permet aux faisceaux d'excitation d'intercepter l'échantillon à différentes positions de l'interface entre le milieu résonant et non résonant.

Selon une autre variante, la source d'émission émet au moins un faisceau d'excitation à longueur d'onde variable, permettant d'obtenir un spectre des résonances vibrationnelles ou électroniques du milieu résonant.

Selon un deuxième aspect, l'invention concerne une méthode pour la détection d'un signal optique non linéaire résonant induit dans un échantillon, l'échantillon comprenant un milieu résonant et un milieu non résonant formant une interface, la méthode comprenant : l'émission d'au moins un premier faisceau lumineux d'excitation du milieu résonant, dit faisceau pompe, à une première pulsation ωp donnée, ledit faisceau pompe étant incident sur l'échantillon selon un axe optique, et interceptant l'échantillon à une position donnée d'une interface transverse entre le milieu résonant et non résonant, la détection d'un premier signal optique non linéaire résultant de l'interaction du ou desdits faisceaux d'excitation avec l'échantillon, la réflexion du ou desdits faisceaux d'excitation, le ou les faisceaux d'excitation ainsi réfléchis interceptant ladite interface transverse sensiblement à la même position que le ou les faisceaux d'excitation incidents, la détection d'un second signal optique non linéaire résultant de l'interaction du ou desdits faisceaux d'excitation réfléchis avec l'échantillon, le traitement des premier et second signaux optiques détectés, comprenant le calcul d'une différence des signaux détectés, la différence étant caractéristique d'une résonance vibrationnelle ou électronique du milieu résonant.

Selon une variante, la méthode comprend l'émission d'un faisceau pompe de pulsation ωp et d'un faisceau Stokes de pulsation ωs, le signal optique non linéaire résultant de l'interaction desdits faisceaux pompe et stokes étant un signal dit signal diffusé CARS, de pulsation ωas = 2ωp - ωs et la différence des premier et second signaux détectés étant caractéristique d'une résonance Raman du milieu résonant.

Selon une autre variante, les premier et deuxième signaux optiques non linéaires sont détectés respectivement dans des directions symétriques par rapport à l'axe optique des faisceaux d'excitation incidents, la différence étant effectuée pour chaque couple de signaux ainsi détectés.

Selon une autre variante, les faisceaux d'excitation subissent un balayage angulaire pour intercepter l'échantillon à différentes positions de l'interface entre le milieu résonant et non résonant.

Selon une autre variante, l'un au moins des faisceaux d'excitation présente une longueur d'onde d'émission variable, permettant d'obtenir un spectre des résonances vibrationnelles ou électroniques du milieu résonant.

### BREVE DESCRIPTION DES DESSINS

D'autres avantages et caractéristiques de l'invention apparaîtront à la lecture de la description, illustrée par les figures suivantes :
Figures 1A et 1B (déjà décrites), principe de l'émission Stokes et anti-Stokes dans un processus de diffusion Raman;
Figure 2A et 2B (déjà décrites), principe de l'émission CARS dans deux modes différents ;
Figures 3A et 3B (déjà décrites), illustrations des processus CARS résonant et non résonant ;
Figures 4A et 4B (déjà décrites), illustrations des situations α et β pour la mise en oeuvre de la méthode selon l'art antérieur ;
Figure 5 (déjà décrite), simulations numériques de résultats obtenus avec la méthode selon l'art antérieur ;
Figures 6A et 6B (déjà décrites), résultats expérimentaux obtenus avec un échantillon symétrique, avec la méthode selon l'art antérieur ;
Figures 7A, 7B, illustrations des situations α et β pour la mise en oeuvre de la méthode selon l'invention ;
Figures 8A et 8B, exemple de montage expérimental pour la mise en oeuvre de la méthode selon l'invention ;
Figure 9, résultats expérimentaux obtenus avec un échantillon du type de celui de la figure 8B ;
Figures 10A à 10D, images obtenues par simulation numérique avec une bille de polystyrène diamètre 3 µm, immergée dans un liquide aqueux d'indice de réfraction n=1.33, avec la méthode selon l'invention ;
Figure 11, exemple de montage expérimental pour la mise en oeuvre de la méthode selon l'invention selon une variante;
Figures 12A, 12B, illustrations des situations α et β pour la mise en oeuvre de la méthode dans l'exemple de la figure 11 ;
Figure 13, schéma des conditions géométriques pour la mise en oeuvre de la diffusion CARS à une interface axiale entre milieux résonant et non résonant ;
Figures 14A à 14E, illustration de la déviation du signal diffusé CARS en fonction de la position relative du lieu de focalisation des faisceaux d'excitation avec une interface axiale entre des milieux résonant et non résonant ;
Figures 15A à 15C, courbes obtenues par simulation numérique, illustrant le décalage su signal diffusé CARS en fonction du paramètre ζ=(ωₚ-ωₛ-Ω_{R})/Γ (décalage normalisé à la résonance Raman) (figure 15A), les intensités lumineuses calculées respectivement dans l'espace des (kₓ>0) et (kₓ<0) et la différence des intensités, en fonction du paramètre ζ (figure 15B) et de la position x du lieu de focalisation des faisceaux d'excitation par rapport à une interface axiale (figure 15C) ;
Figures 16A à 16C, schémas illustrant 3 modes possibles pour la mise en oeuvre de la détection CARS selon l'invention.

### DESCRIPTION DETAILLEE

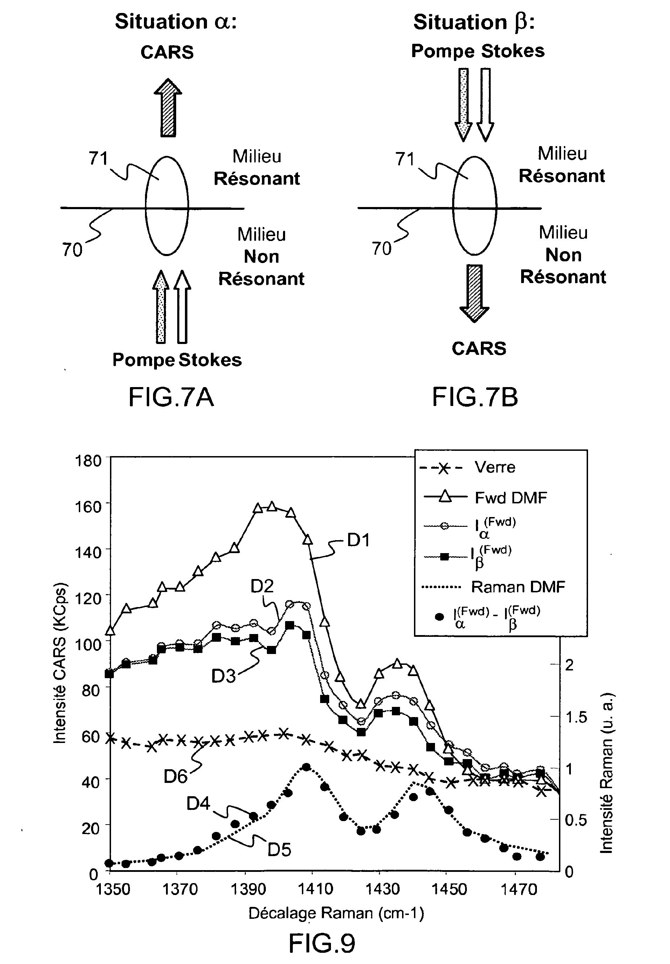

Les figures 7A et 7B illustrent par deux schémas le principe de la méthode de détection selon l'invention dans le cas de la diffusion CARS. Selon la méthode, un faisceau pompe de pulsation ωₚ et un faisceau stokes de pulsation ωₛ, colinéaires, interceptent une interface transverse 70, c'est-à-dire présentant une composante non nulle selon un plan perpendiculaire à l'axe des faisceaux incidents (axe optique), entre un milieu non résonant et un milieu résonant. En général, les deux faisceaux sont focalisés et on note 71 le volume de focalisation commun des faisceaux qui interceptent l'interface transverse 70. Selon l'invention, les faisceaux d'excitation traversent l'interface selon une première direction, dite situation α, puis sont réfléchis vers l'échantillon de telle sorte à intercepter la même interface sensiblement à la même position, mais dans la direction opposée (situation β). Dans l'exemple de la figure 7, les faisceaux d'excitation traversent d'abord l'interface dans le sens milieu non résonant/milieu résonant (figure 7A, situation α), puis dans le sens milieu résonant/milieu non résonant (figure 7B, situation β). Les intensités des signaux CARS diffusés I_{α}(Fwd) et I_{β}(Fwd) sont mesurées respectivement dans les deux situations α et β, et leur différence ΔI_{Fwd} est calculée, après calibrage, pour donner un signal dont la déposante a montré qu'il est proportionnel à la partie imaginaire Im[χ⁽³⁾_{1R} ] de la susceptibilité non linéaire d'ordre 3 du milieu résonant. Selon l'invention, une seule impulsion du faisceau pompe et du faisceau stokes est utilisée pour exciter l'échantillon dans les situations a et β, permettant d'augmenter le rapport signal à bruit par rapport à la méthode selon l'art antérieur tel que décrite dans les figures 4 à 6.

Faisant la différence des signaux CARS générés par un objet et son symétrique par rapport à un plan perpendiculaire à l'axe optique, la méthode selon l'invention est nommée Dz-CARS dans la suite de la description (pour Differential imaging in Z symmetry).

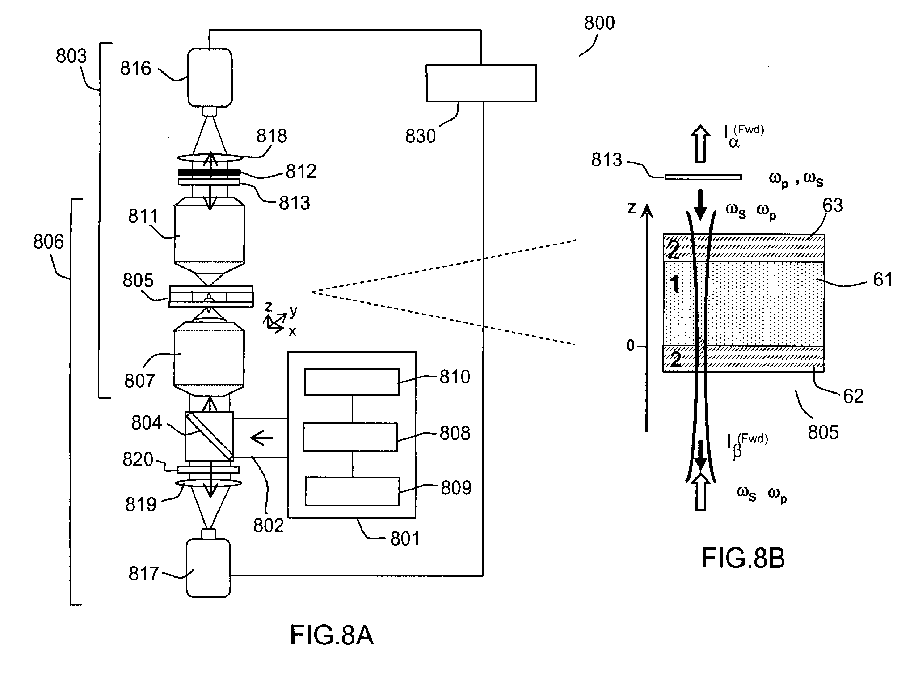

La figure 8A illustre un exemple de dispositif pour la mise en oeuvre de la méthode de détection selon l'invention. Le dispositif de détection 800 comprend généralement un système laser 801 permettant l'émission d'un premier faisceau d'excitation de pulsation ωₚ (faisceau pompe) et d'un second faisceau d'excitation de pulsation ωₛ (faisceau Stokes), colinéaires, les deux faisceaux d'excitation étant symbolisés par la flèche 802. Le dispositif 800 comprend en outre un élément optique, par exemple une lame réfléchissante 804, permettant d'envoyer les deux faisceaux d'excitation dans un premier module de détection optique du dispositif généralement référencé 803, selon une direction principale Z.

Le système laser 801 comprend par exemple, dans une application dite *deux couleurs*, deux sources laser 808 fines spectralement, accordables, par exemple de type Titane - Saphir, émettant entre 690 et 1000 nm, pompés par un laser de pompe 809, type Nd :YVO4 émettant à 532 nm. Les lasers accordables émettent par exemple des impulsions picoseconde, typiquement de l'ordre de 3 ps, pour former les faisceaux d'excitation pompe de pulsation ωₚ (de longueur d'onde typique 730 nm) et Stokes de pulsation ωₛ. Un sélecteur d'impulsion 810 (ou « pulse picker ») peut être utilisé pour réduire la cadence des lasers d'excitation pompe et sonde sans réduire la puissance crête des impulsions. L'utilisation d'un faisceau Stokes ou d'un faisceau pompe accordable permet notamment de balayer le spectre d'émission anti-Stokes pour des applications en spectroscopie visant à déterminer le spectre Raman du milieu résonant. D'autres sources laser accordables peuvent être utilisées, par exemple de type oscillateur paramétrique optique (OPO), amplificateur paramétrique optique (OPA), oscillateurs picoseconde de type Nd :verre, lasers fibrés dopés Ytterbium ou Erbium, etc. Les sources peuvent également être des sources lasers nanoseconde ou femtoseconde, en fonction de la largeur spectrale des raies Raman que l'on veut observer. Cependant, les impulsions nanosecondes, si elles sont très bonnes d'un point de vue spectral, ont une puissance crête moins élevée que les impulsions ps. Par ailleurs, les effets thermiques associés aux impulsions ns sont plus à même d'endommager les échantillons biologiques. Les impulsions femtosecondes brutes sont généralement trop larges spectralement. En phase condensée (solide ou liquide), les largeurs de raie sont autour de 10-20 cm⁻¹, ce qui correspond à l'emploi d'impulsions ps.

Dans l'exemple de la figure 8A, le premier module de détection optique 803 comprend un objectif de focalisation 807 visant à focaliser les faisceaux pompe et Stokes en un volume de focalisation commun pour l'analyse de l'échantillon 805, représenté sur la figure 8B. L'utilisation d'un objectif de focalisation est particulièrement appropriée dans les applications type microscopie. Cependant, il n'est pas indispensable pour l'émission du signal CARS de travailler en faisceaux focalisés, et notamment dans le cas de l'étude d'échantillons minces. Dans cet exemple, l'échantillon est formé, comme dans l'exemple de la figure 6B, d'une couche 61 de DMF (N,N-diméthylformamide) entre deux lames de verre 62, 63. Le premier module de détection optique 803 comprend également un objectif de collection 811 permettant de collecter le signal optique non linéaire émis, dans cet exemple le signal diffusé CARS, et un détecteur 816, par exemple un détecteur ponctuel de type photodiode à avalanche (APD), photodiode rapide (PIN), ou photomultiplicateur (PMT), précédé d'une lentille de collection 818 et d'un filtre 812 pour couper les faisceaux d'excitation résiduels.

Dans cet exemple, Le passage du problème α au problème β pour un échantillon donné s'effectue en retournant les faisceaux pompe et Stokes comme indiqué sur la figure 8A au moyen d'un miroir 813, dont le coefficient de réflexion est adapté aux longueurs d'onde des faisceaux d'excitation d'une part, et du signal diffusé CARS d'autre part, de telle sorte à réfléchir les faisceaux pompes et Stokes et transmettre le signal diffusé CARS résultant de l'interaction des faisceaux d'excitation avec l'échantillon. Dans cette situation, lors du premier passage des impulsions incidentes, un premier signal CARS est émis vers l'avant et collecté par le détecteur 816 ; il s'agit alors de la situation α et le signal collecté est I_{α}(Fwd). Les impulsions pompes et Stokes sont alors réfléchies par le miroir pour être renvoyées sur l'échantillon, qui apparaît alors dans la situation β, dans un deuxième module de détection optique généralement référencé 806 sur la figure 8A. Le deuxième module de détection optique 806 comprend en commun avec le premier module de détection optique, les objectifs 811 et 807, mais l'objectif 811 sert d'objectif de focalisation pour les faisceaux d'excitation renvoyés par le miroir 813 et l'objectif 807 sert d'objectif de collection pour le signal optique non linéaire résultant de l'interaction des faisceaux d'excitation réfléchis avec l'échantillon 805. Le deuxième module optique 806 comprend par ailleurs un détecteur 817, par exemple un détecteur ponctuel du même type que le détecteur 816, précédé d'une lentille de collection 819 et d'un filtre 820 pour couper les faisceaux d'excitation résiduels. Le signal collecté vers l'arrière par le détecteur 817 est alors I_{β}(Fwd). On opère en temps réel la différence des signaux I_{α}(Fwd)̃ - I_{β}(Fwd), dont la déposante a montré qu'elle était proportionnelle au spectre Raman du milieu résonant, au moyen d'une unité de traitement notée 830 sur la figure 8A. Avantageusement, la lame réfléchissante 804 est une lame dichroïque, permettant de réfléchir les faisceaux d'excitation émis par la source laser 801 vers l'échantillon 805 (situation α) tout en transmettant le signal diffusé CARS dans la situation β. Avantageusement, les objectifs de focalisation 807 et de collection 811 sont identiques permettant d'obtenir un montage symétrique dans les situations α et β. En pratique, une calibration des détecteurs 816, 817, est effectuée préalablement à la mesure. Par exemple, cette calibration est effectuée sur un échantillon ne comprenant que du solvant.

Comme cela apparaît sur la figure 8B, le dispositif selon l'invention permet aux même impulsions pompe et Stokes d'intercepter l'échantillon à la même position de l'interface transverse, respectivement dans les situations α et β. La méthode peut ainsi être utilisée avec n'importe quel type d'échantillon présentant une interface entre un milieu résonant et un milieu non résonant, et non plus seulement un échantillon symétrique ou réversible.

Selon un exemple, le dispositif 800 comprend également un dispositif de balayage des faisceaux d'excitation dans le plan XY de l'échantillon (non représenté). Ce dispositif de balayage peut être utile à la fois dans une application en spectroscopie, pour ajuster le lieu de focalisation des faisceaux d'excitation sur une interface transverse des milieux résonant et non résonant formant l'échantillon, soit dans une application d'imagerie. Il peut s'agir d'un dispositif permettant le déplacement de l'échantillon, ou de manière préférée, d'un dispositif de balayage des faisceaux d'excitation. Avantageusement, on pourra utiliser un miroir de renvoi des faisceaux d'excitation 813 sphérique, de telle sorte à renvoyer les faisceaux d'excitation dans une direction parallèle opposée, ce qui permettra aux faisceaux d'excitation réfléchis (situation β) d'intercepter l'échantillon à la même position que celle des faisceaux incidents (situation α).

La figure 9 illustre des résultats expérimentaux obtenus avec le dispositif de la figure 8A et un échantillon du type de celui de la figure 8B, dans lequel une fine couche de DMF (N,N-dimethylformamide) fait office de milieu résonant entre deux lamelles de verre (qui font office ici de milieu non résonant). La longueur d'onde du faisceau de pompe est 730 nm, celui du faisceau d'excitation Stokes autour de 814 nm. L'ouverture numérique des objectifs 807, 811 de 0.6 dans l'air. Sur la figure 9, sont illustrés en fonction du décalage Raman respectivement par la courbe D1, le signal diffusé CARS mesuré dans le DMF, par la courbe D2, l'intensité I_{α}(Fwd) mesurée dans la situation α (figure 6B), par la courbe D3, l'intensité I_{β}(Fwd) mesurée dans la situation β, par la courbe D4, la différence ΔI_{Fwd}, par la courbe D5 (en pointillés) le spectre Raman, et par la courbe D6 le signal diffusé CARS mesuré dans le verre. La courbe D1 fait clairement apparaître l'effet de distorsion dû à la contribution non résonante du milieu résonant, tandis que la différence ΔI_{Fwd} se superpose exactement au spectre Raman du DMF (en pointillés). On peut ainsi apprécier la capacité de Dz-CARS à extraire le spectre Raman du milieu résonant sans aucune distorsion due à la partie non résonante du milieu résonant.

Ces résultats expérimentaux démontrent la pertinence de l'approche Dz-CARS pour une spectroscopie CARS sans bruit non résonant, et avec une précision nettement améliorée en comparaison de l'art antérieur, tel qu'illustré sur la figure 6A. Par ailleurs, la méthode selon l'invention permet de repérer parfaitement la position de l'interface sur laquelle on travaille, et de venir focaliser des impulsions d'excitation identiques, à la même position de l'interface dans les problèmes α et β, permettant notamment des applications en microscopie.

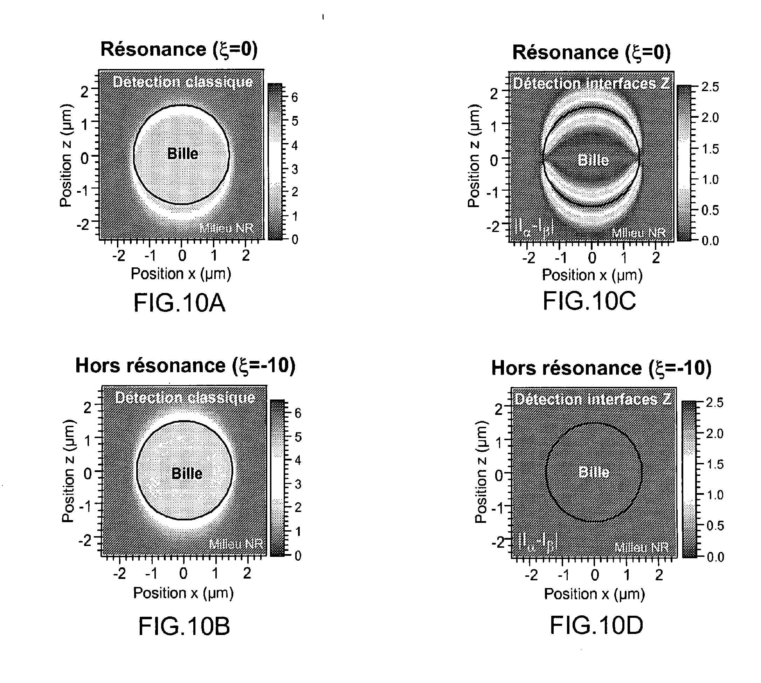

Les figures 10A à 10D présentent des simulations numériques obtenues avec la méthode selon l'invention, sur un autre type d'échantillon. Les images sont calculées en prenant pour échantillon une bille de 3 µm de diamètre dans un solvant de type aqueux (longueur d'onde pompe 730 nm, longueur d'onde Stokes 814 nm, ouverture numérique de l'objectif d'excitation 1.2 dans l'eau, ouverture numérique de l'objectif de collection 1.2 dans l'eau). L'image est calculée dans chacun des cas dans un plan XZ de la bille correspondant à un plan longitudinal contenant la direction d'incidence des faisceaux d'excitation. Les figures 10A et 10B représentent une image de la bille en détection classique, c'est-à-dire que seul le signal diffusé CARS en situation α est représenté. A la résonance (Figure 10A), le signal est plus intense qu'hors résonance (Figure 10B), mais la différence des contrastes est faible du fait des contributions non résonantes de la bille et de son environnement. Les figures 10C et 10D représentent des images de la bille à la résonance et hors résonance, mais calculées avec la méthode Dz-CARS selon l'invention, c'est-à-dire en soustrayant les signaux CARS diffusés dans les situations α et β, avec un montage du type de celui de la figure 8A. Hors résonance (Figure 10D), le contraste est nul, car la différence des signaux qui ne contiennent qu'une contribution non résonante s'annule. Au contraire, dans la figure 10C, calculée à la résonance, le contraste aux interfaces transverses est maximal. Ces résultats établissent la faisabilité de Dz-CARS dans une configuration de microscopie.

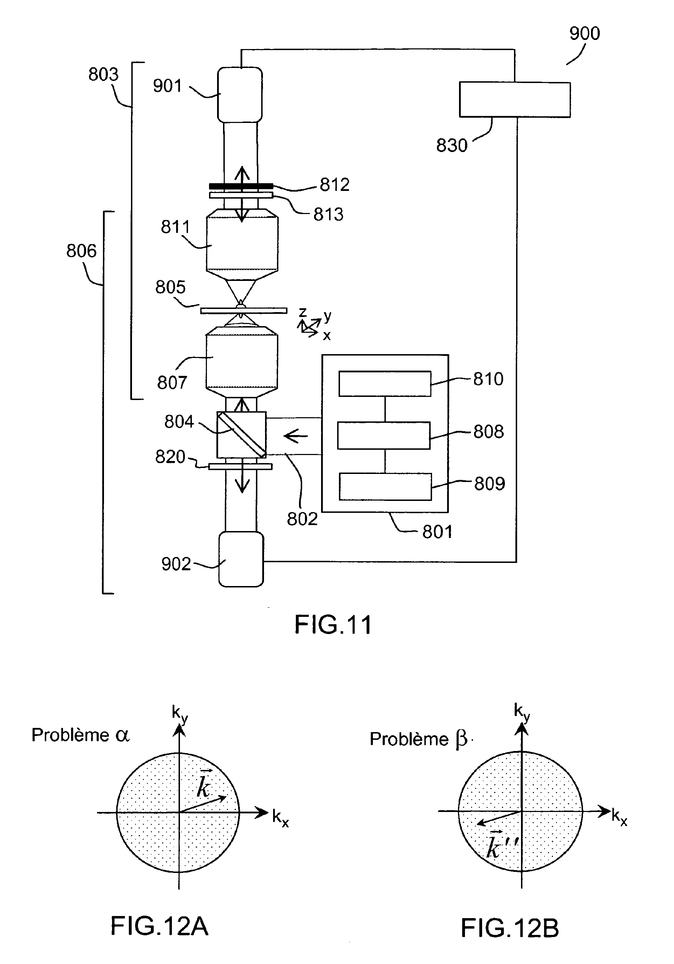

La figure 11 illustre un exemple de montage expérimental pour la mise en oeuvre de la détection selon l'invention selon une variante. Le montage est sensiblement identique à celui de la figure 8A, mais les détecteurs ponctuels 816, 817 sont remplacés par des détecteurs matriciels 901, 902, par exemple de type CCD, ou CMOS. Selon cette variante, on ne mesure plus, comme précédemment, la différence des signaux diffusés CARS intégrés respectivement pour les situations α et β, dans tout l'espace des vecteurs d'onde *̅k̅*̅ contenu dans l'ouverture numérique des objectifs de détection, mais on mesure la différence des signaux diffusés CARS dans des directions symétriques par rapport à l'axe optique des faisceaux d'excitation incidents sur l'échantillon, les signaux étant détectés pour le premier dans la situation α, pour le second dans la situation β.

Ainsi, comme cela apparaît sur la figure 12A, dans la situation α, on mesure le signal diffusé CARS dans une direction représentée par le vecteur d'onde *̅k̅*̅, de coordonnées kₓ, k_{y} dans le plan de projection XY perpendiculaire à l'axe principal z, et dans la situation β, on mesure le signal diffusé CARS dans une direction représentée par le vecteur d'onde *̅k̅*̅" de coordonnées -kₓ, -k_{y} dans le plan de projection XY. Ici, comme précédemment, la situation α correspond à la génération d'un signal diffusé CARS résultant de l'interaction des faisceaux d'excitation incidents avec l'échantillon, alors que la situation β correspond à la génération d'un signal diffusé CARS résultant de l'interaction des faisceaux d'excitation réfléchis avec l'échantillon.

La déposante a en effet démontré, à la fois théoriquement et expérimentalement, que cette méthode permettait outre la détection aux interfaces transverses de l'échantillon, une détection aux interfaces axiales de l'échantillon, c'est-à-dire présentant une composante non nulle selon l'axe optique des faisceaux d'excitation incidents. Dans la suite de la demande, la méthode est nommée D-CARS.

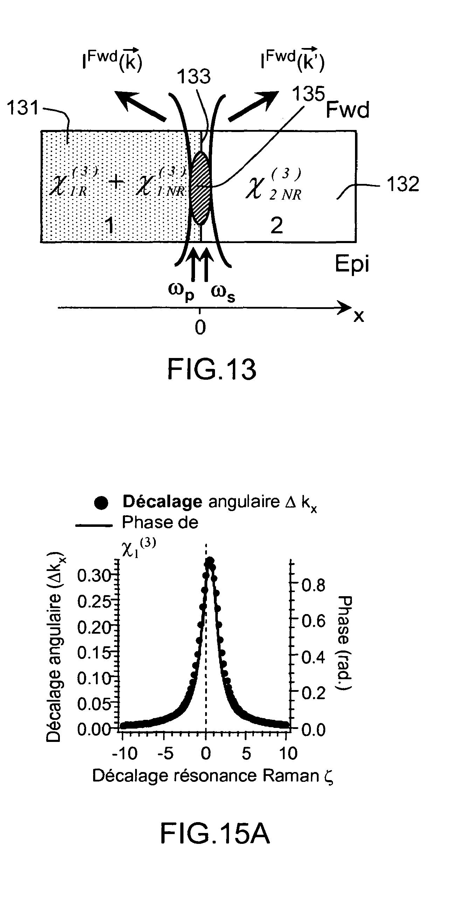

Les figures 13 à 15 illustrent pour la meilleure compréhension de D-CARS l'approche ci-dessous nommée Dk-CARS de détection aux interfaces axiales (pour Differential imaging in K-space) qui pourtant n'est pas un mode de réalisation de la présente invention.

La figure 13 représente un échantillon comprenant le milieu résonant 131, par exemple un milieu contenant le milieu à analyser, c'est-à-dire le milieu d'intérêt biologique, et le milieu non résonant 132, typiquement un milieu contenant le solvant. La susceptibilité non linéaire du 3^{ème} ordre est définie dans le milieu résonant 131 par un terme résonant χ⁽³⁾_{1R} et un terme non résonant χ⁽³⁾_{1NR}. Dans le milieu non résonant 132, elle est définie par le terme non résonant χ⁽³⁾_{2NR}. Selon cet aspect de la méthode selon l'invention, les faisceaux d'excitation pompe de pulsation ωₚ et sonde de pulsation ωₛ, colinéaires, sont incidents sur l'échantillon dans un volume de focalisation 135, interceptant une interface axiale 133 de l'échantillon. Selon cet aspect de la méthode, comme cela est expliqué en détail par la suite, il est procédé à l'analyse de l'intensité lumineuse du faisceau optique non linéaire dans l'espace des vecteurs d'onde *̅k̅*̅,̅ c'est-à-dire dans l'espace des directions d'émission du signal émis par processus CARS, de part et d'autre de l'interface, cette intensité étant notée sur la figure 13 I^{Fwd}(*̅k̅*̅) et I^{Fwd}(*̅k̅*̅'̅) de part et d'autre de l'interface respectivement, l'abréviation « Fwd » représentant le signal CARS diffusé vers l'avant, par opposition au signal dit « Epi », diffusé vers l'arrière.

En effet, la déposante a démontré expérimentalement et théoriquement qu'à une interface axiale, le signal émis par processus CARS est dévié à la résonance.

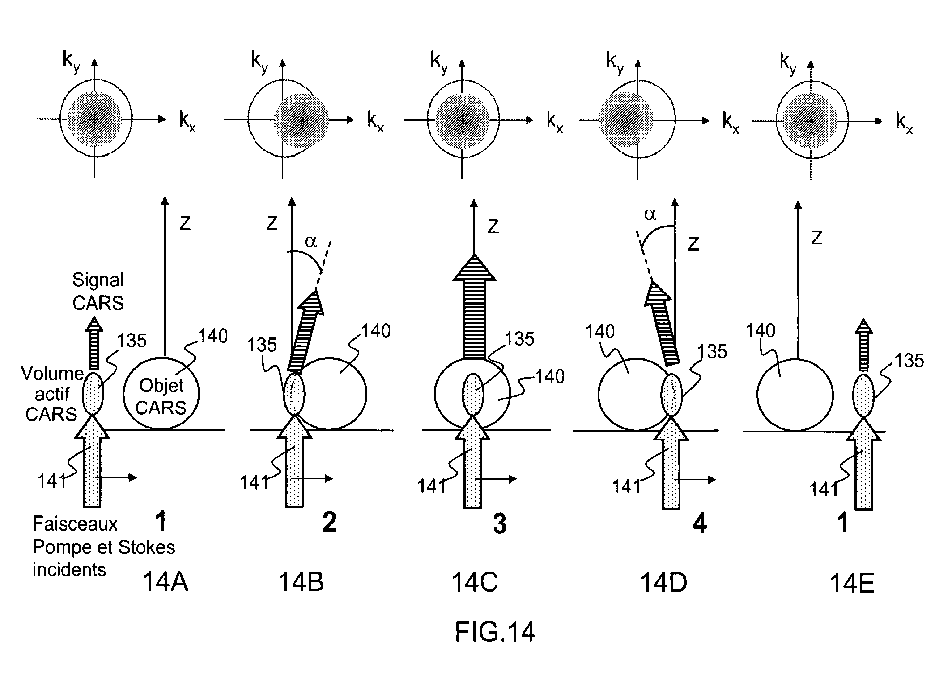

Les figures 14A à 14E représentent par une série de schémas la déviation du signal diffusé CARS en fonction de la position relative des faisceaux pompe et Stokes incidents avec l'interface. Sur les figues 14A à 14E est représenté le volume actif CARS 135 (lieu de focalisation des faisceaux pompe et Stokes) qui est déplacé à travers un objet CARS 140 (chaque vignette correspond à une position différente du volume actif dans l'objet). L'objet CARS est considéré comme résonant alors que le milieu entourant l'objet est considéré comme non résonant (il sera appelé dans la suite de la description « le solvant »). Il apparaît qu'aux interfaces entre l'objet CARS et le solvant, le signal diffusé CARS est affecté d'une déviation (ou tilt). La déposante a démontré que cette déviation relève d'un processus purement interférentiel entre l'objet CARS et le solvant et n'est en aucun cas imputable aux effets réfractifs. Sur les deux vignettes 1 (figures 14A et 14E), le volume CARS est focalisé dans le solvant et le signal diffusé CARS est émis dans la direction normale (parallèle à l'axe d'incidence des faisceaux pompe et Stokes, symbolisé par la flèche 141); sur la vignette 2 (figure 14B), le volume CARS est focalisé sur l'interface entre l'objet CARS et le solvant, le signal diffusé CARS est alors émis avec un angle α positif (par rapport à l'axe d'incidence des faisceaux pompe et Stokes), déviant ainsi le faisceau dans une direction définie par (kₓ>0) dans l'espace des vecteurs d'onde *̅k̅*̅. Sur la vignette 3 (figure 14C), le volume CARS est centré dans l'objet CARS, le signal CARS est alors intense et est dirigé dans la direction normale (parallèle à l'axe d'incidence des faisceaux pompe et Stokes). On retrouve ensuite une situation similaire sur les vignettes suivantes (vignette 4, figure 14D et vignette 1, figure 14E); il est cependant important de noter que sur la vignette 4, α est négatif et correspond à une déviation dans une direction définie par (kₓ<0). La déposante a démontré à la fois théoriquement et expérimentalement, que l'évolution de l'angle α en fonction du paramètre normalisé, ζ=(ωₚ-ωₛ-Ω_{R})/Γ (où Γ est la largeur spectrale de la raie vibrationnelle étudiée), suit la phase du tenseur χ⁽³⁾₁ = χ⁽³⁾_{1R} + χ⁽³⁾_{1NR} décrivant le milieu 1. La déposante a également démontré qu'il est possible en analysant dans des directions de diffusion symétriques le signal CARS de déterminer le spectre Raman.

La figure 15A présente les résultats d'un calcul numérique rigoureux prenant en compte la nature vectorielle des faisceaux pompe et Stokes focalisés sur une interface axiale entre un milieu 1 résonant et un milieu 2 non résonant (figure 13). L'analyse consiste à étudier dans l'espace des vecteurs d'onde *̅k̅*̅ la déviation du signal diffusé CARS émis en fonction du paramètre de décalage normalisé à la résonance Raman ζ=(ωₚ-ωₛ-Ω_{R})/Γ̃. Hors résonance (ζ=-10), le faisceau est centré tandis qu'à la résonance (ζ=0), il apparaît clairement un décalage angulaire.

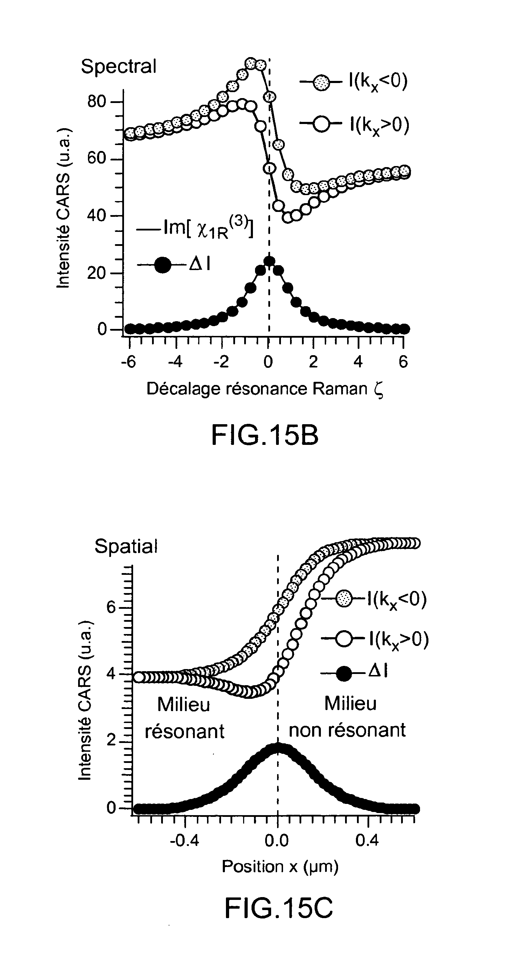

Les figures 15B et 15C représentent des simulations numériques dans lesquelles le signal diffusé CARS est intégré respectivement dans les demi-espaces (kₓ>0) et (kₓ<0) puis la différence des signaux ainsi intégrés est effectuée. Sur la figure 15B sont représentés les spectres CARS intégrés sur les demi-espaces (kₓ>0) et (kₓ<0) lorsque les faisceaux pompe et Stokes sont focalisés sur l'interface (x=0), ainsi que leur différence ΔI. Cette différence suit exactement le spectre Raman donné par Im[χ⁽³⁾_{1R}]. Ceci démontre la pertinence de l'approche Dk-CARS pour une spectroscopie CARS sans bruit non résonant. Il est ainsi par exemple possible, en faisant varier la fréquence du faisceau Stokes, de déterminer le spectre Raman du milieu résonant. Sur la figure 15CB, sont représentés les signaux CARS intégrés sur les demi-espaces (kₓ>0) et (kₓ<0) en fonction du lieu de focalisation des faisceaux pompe et Stokes par rapport à l'interface. Leur différence est non nulle uniquement au voisinage de l'interface (x = 0). Une imagerie CARS sans bruit de fond non résonant peut ainsi être obtenue au voisinage de l'interface.

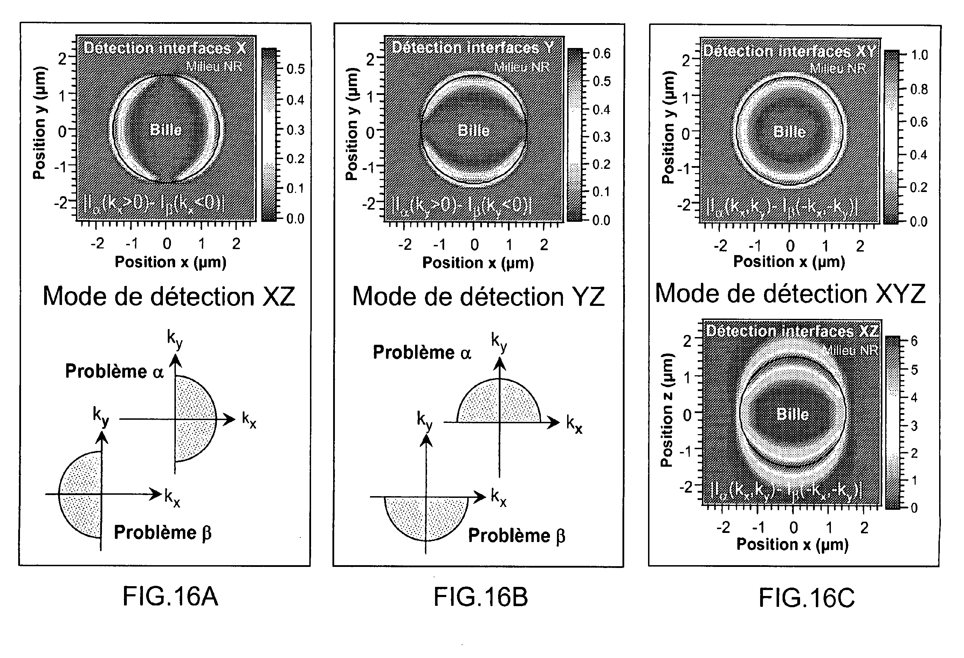

Les figures 16A à 16C présentent ainsi 3 modes de détection possibles pour la microscopie D-CARS associant l'approche Dz-CARS et l'approche Dk-CARS. Pour chaque mode de détection une simulation numérique représente l'image obtenue pour une bille de 3 µm de diamètre dans un solvant de type aqueux (longueur d'onde pompe 730 nm, longueur d'onde Stokes 814 nm, ouverture numérique de l'objectif d'excitation 1.2 dans l'eau, ouverture numérique de l'objectif de collection 1.2 dans l'eau). La figure 16A représente le mode de détection XZ permettant une détection aux interfaces perpendiculaires à l'axe X et aux interfaces perpendiculaires à l'axe Z. Pour cela, on calcule la différence des signaux diffusés CARS respectivement dans les situations α et β en intégrant le signal CARS dans l'espace (kₓ>0) (problème α, Figure 7A) et dans l'espace (kₓ<0) (problème β, Figure 7B), le référentiel choisi étant celui de la direction des faisceaux d'excitation. Ainsi par exemple, en modifiant la position relative du lieu de focalisation des faisceaux pompe et Stokes, on obtient l'image de la Figure 16A dans un plan équatorial de la bille. La figure 16B représente le mode de détection YZ permettant une détection aux interfaces perpendiculaires à l'axe Y et aux interfaces perpendiculaires à l'axe Z. Dans cet exemple, on calcule pour différentes positions la différence des intensités lumineuses intégrées dans l'espace (k_{y}>0) (problème α, Figure 7A) et dans l'espace (k_{y}<0) (problème β, Figure 7B). La figure 16C représente le mode de détection XYZ. L'image est calculée en faisant la différence deux à deux des intensités lumineuses I_{α}(kₓ, k_{y}) et I_{β}(-kₓ,-k_{y}) mesurées dans deux directions *̅k̅*̅ (kₓ,k_{y,}k_{z}) et *̅k̅*̅" (-kₓ,-k_{y},k_{z}) opposées, respectivement dans les situations α et β, les directions étant contenues dans le cône angulaire dont l'angle d'ouverture est défini par l'ouverture numérique de collection du signal diffusé CARS (par exemple 1.2 dans l'eau). Là encore, les coordonnées des vecteurs d'onde *̅k̅*̅ et *̅k̅*̅ " sont exprimées dans les référentiels des faisceaux d'excitation propres respectivement aux situations α et β.

Avantageusement, dans l'exemple de la figure 11, on pourra prévoir des moyens de balayage angulaire des faisceaux d'excitation, notamment pour les applications en microscopie. Avantageusement, comme dans l'exemple du dispositif de la figure 8A, on pourra choisir un miroir de renvoi des faisceaux d'excitation 813 sphérique. Par ailleurs, il est avantageux de positionner les caméras 901, 902 dans les pupilles de sortie respectivement des objectifs 811, 807, afin de garder la direction d'incidence des faisceaux d'excitation centrée sur la caméra dans chacune des situations α et β. Une calibration des caméras en solution est également possible pour repérer, dans chacune des situations α et β, et pour chaque angle de balayage, la direction des faisceaux d'excitation par rapport à laquelle sera mesurée la déviation du signal diffusé CARS.

La détection Dz-CARS ou D-CARS a été décrite au travers des exemples de mise en oeuvre des figures 8A et 11 dans une application *deux couleurs*, utilisant deux sources laser fines spectralement. Dans une application dite *multiplexe*, on pourra choisir une source d'émission du faisceau Stokes large spectralement, générée par exemple par une impulsion femtoseconde ou par un supercontinuum généré par une fibre optique ou un autre milieu dispersif. Le signal pompe reste lui fin spectralement. Dans cette application, il sera possible d'acquérir un spectre Raman en une seule impulsion, par exemple en utilisant deux spectromètres à fente ou un spectromètre unique équipé d'une caméra CCD dans lequel on injecte les deux signaux détectés dans les deux situations α et β. Dans cette application, il s'agit d'acquérir les spectres dans chacune des situations (α ou β) et de faire leur différence.

Dans une application dite *trois couleurs*, on utilise trois longueurs d'ondes de pulsations associées ω₁, ω₂ et ω₃ pour générer un signal CARS à la pulsation ω₁-ω₂+ω₃. Le signal CARS peut être rendu sans bruit non résonant en détectant les signaux à la pulsation ω₁-ω₂+ω₃ dans les situations (α ou β) et en faisant leur différence.

Bien que la méthode de détection ait été décrite dans le cas de la diffusion CARS, elle s'applique aussi bien à d'autres processus non linéaires, du 2^{ème} ou du 3^{ème} ordre, à la fois pour des applications de spectroscopie ou pour des applications de microscopie par détection aux interfaces axiales, permettant ainsi de révéler des interfaces entre milieu résonant et non résonant. Dans chaque cas, on procède à une analyse du signal optique non linéaire résultant de l'interaction d'un ou plusieurs faisceaux d'excitation avec un échantillon présentant une interface entre un milieu résonant et un milieu non résonant. Cette analyse spatiale permet soit de révéler l'interface entre le milieu résonant et le milieu non résonant, soit de caractériser un spectre du milieu résonant.

Selon un exemple, on peut utiliser un processus de génération de troisième harmonique résonant dans lequel la résonance est une résonance électronique, en excitant avec un faisceau d'excitation pompe unique, de pulsation ωₚ, un échantillon comprenant une interface entre un milieu résonant et un milieu non-résonant. Par exemple on utilise une source laser picoseconde ou femtoseconde de type oscillateurs Ti : Saphir, Nd :verre, lasers fibrés dopés Ytterbium ou Erbium.

Selon un autre exemple, on peut utiliser un processus de mélange à quatre ondes résonant dans lequel la résonance est une résonance électronique, en excitant avec un faisceau d'excitation pompe unique, de pulsation ωₚ, un échantillon comprenant une interface entre un milieu résonant et un milieu non-résonant. Par exemple on utilise une source laser picoseconde ou femtoseconde de type oscillateurs Ti : Saphir, Nd :verre, lasers fibrés dopés Ytterbium ou Erbium.

Les deux exemples décrits précédemment traitent de résonances électroniques. On les trouve dans des atomes, de molécules, des cristaux semi-conducteurs, etc.

Selon un autre exemple, on pourra exciter la seconde harmonique résonante avec un faisceau pompe unique, ou on pourra faire de la somme de fréquence avec un faisceau pompe et un faisceau sonde (effet non linéaire du 2^{ème} ordre).

Bien que décrits à travers un certain nombre d'exemples de réalisation détaillés, le dispositif de détection et la méthode selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Dispositif pour la détection d'un signal optique non linéaire résonant induit dans un échantillon (805) de type comprenant un milieu résonant (61) et un milieu non résonant (62, 63) formant une interface, le dispositif comprenant :
- une source d'émission (801) d'au moins un premier faisceau lumineux d'excitation, dit faisceau pompe, à une première pulsation ωₚ donnée, adapté à l'excitation du milieu résonant d'un échantillon du type donné,
- un premier module optique (803) adapté à la détection d'un signal optique non linéaire résultant de l'interaction dudit faisceau pompe avec l'échantillon lorsque ledit faisceau pompe est incident sur l'échantillon selon un axe optique et intercepte l'échantillon à une position donnée d'une interface transverse entre le milieu résonant et le milieu non résonant de l'échantillon,
- des moyens de réflexion (813) dudit faisceau pompe, agencés de telle sorte à ce que ledit faisceau pompe ainsi réfléchi intercepte ladite interface transverse sensiblement à la même position que ledit faisceau pompe incident, **caractérisé par** :
- un deuxième module optique (806) adapté à la détection du signal optique non linéaire résultant de l'interaction dudit faisceau pompe réfléchi avec l'échantillon,
- un module de traitement (830) des signaux optiques détectés par lesdits premier et second modules de détection, comprenant le calcul d'une différence des signaux détectés, la différence étant caractéristique d'une résonance vibrationnelle ou électronique du milieu résonant.

2. Dispositif selon la revendication 1, dans lequel
- la source d'émission (801) permet l'émission d'au moins un deuxième faisceau d'excitation du milieu résonant, à au moins une deuxième pulsation ωs différente de la première pulsation ωp, l'ensemble des faisceaux d'excitation étant colinéaires, agencés pour intercepter ladite interface transverse à ladite position en un volume de focalisation commun,
- les moyens de réflexion sont agencés de telle sorte à réfléchir l'ensemble des faisceaux d'excitation sur ladite interface transverse, à la même position sur l'interface,
- la différence des signaux détectés par le premier et le second module de détection est caractéristique d'une résonance vibrationnelle ou électronique du milieu résonant à une pulsation égale à une combinaison linéaire des pulsations des première et seconde pulsations.

3. Dispositif selon la revendication 2, dans lequel la source d'émission (801) permet l'émission d'un faisceau pompe de pulsation ωp et d'un faisceau Stokes de pulsation ωs, le signal optique non linéaire résultant de l'interaction desdits faisceaux pompe et stokes est un signal dit signal diffusé CARS, de pulsation ωas = 2ωp - ωs et la différence des signaux détectés par le premier et le second module de détection est caractéristique d'une résonance Raman du milieu résonant.

4. Dispositif selon l'une des revendications précédentes, dans lequel les moyens de réflexion sont formés d'un miroir réfléchissant (813) permettant de réfléchir le ou les faisceaux d'excitation et de transmettre ledit signal optique non linéaire.

5. Dispositif selon la revendication 4, dans lequel le miroir réfléchissant (813) est sphérique.

6. Dispositif selon l'une des revendications précédentes, comprenant en outre
- un objectif de focalisation (807) du ou desdits faisceaux d'excitation incidents en un volume de focalisation commun (71), permettant d'intercepter ladite interface entre le milieu résonant et le milieu non résonant et
- un objectif de collection du signal non linéaire résultant de l'interaction des faisceaux d'excitation incidents avec l'échantillon, ledit objectif de collection étant identique à l'objectif de focalisation des faisceaux incidents et
- ledit objectif de collection formant un objectif de focalisation des faisceaux d'excitation réfléchis et ledit objectif de focalisation des faisceaux incidents formant un objectif de collection du signal non linéaire résultant de l'interaction des faisceaux d'excitation réfléchis avec l'échantillon.

7. Dispositif selon l'une des revendications précédentes, comprenant en outre une lame de séparation dichroïque (804) permettant d'envoyer le ou les faisceaux d'excitation émis par la source d'émission (801) vers l'échantillon et de laisser passer le signal optique non linéaire résultant de l'interaction du ou des faisceaux d'excitation réfléchis avec l'échantillon.

8. Dispositif selon l'une quelconque des revendications précédentes, dans lequel chacun des modules de détection optique comprend un dispositif d'enregistrement d'images, le signal optique non linéaire étant collecté dans chacun des modules de détection optique respectivement dans des directions symétriques par rapport à l'axe optique, la différence étant effectuée pour chaque couple de signaux ainsi détectés.

9. Dispositif selon l'une quelconque des revendications précédentes, comprenant en outre un dispositif de balayage angulaire du ou des faisceaux d'excitation, permettant au ou aux faisceaux d'excitation d'intercepter l'échantillon à différentes positions de l'interface entre le milieu résonant et non résonant.

10. Dispositif selon l'une des revendications précédentes, dans lequel la source d'émission émet au moins un faisceau d'excitation à longueur d'onde variable, permettant d'obtenir un spectre des résonances vibrationnelles ou électroniques du milieu résonant.

11. Méthode pour la détection d'un signal optique non linéaire résonant induit dans un échantillon (805), l'échantillon comprenant un milieu résonant (61) et un milieu non résonant (62, 63) formant une interface, la méthode comprenant :
- l'émission d'au moins un premier faisceau lumineux d'excitation du milieu résonant, dit faisceau pompe, à une première pulsation ωₚ donnée, ledit faisceau pompe étant incident sur l'échantillon selon un axe optique, et interceptant l'échantillon à une position donnée d'une interface transverse entre le milieu résonant et non résonant,
- la détection d'un premier signal optique non linéaire résultant de l'interaction du ou desdits faisceaux d'excitation avec l'échantillon,
- la réflexion du ou desdits faisceaux d'excitation, le ou les faisceaux d'excitation ainsi réfléchis interceptant ladite interface transverse sensiblement à la même position que le ou les faisceaux d'excitation incidents,
- la détection d'un second signal optique non linéaire résultant de l'interaction du ou desdits faisceaux d'excitation réfléchis avec l'échantillon,
- le traitement des premier et second signaux optiques détectés, comprenant le calcul d'une différence des signaux détectés, la différence étant caractéristique d'une résonance vibrationnelle ou électronique du milieu résonant.

12. Méthode selon la revendication 11, comprenant
- l'émission d'au moins un deuxième faisceau d'excitation du milieu résonant, à au moins une deuxième pulsation ws différente de la première pulsation ωp, l'ensemble des faisceaux d'excitation étant colinéaires, et interceptant ladite interface transverse à ladite position en un volume de focalisation commun,
- la différence des premier et second signaux détectés étant caractéristique d'une résonance vibrationnelle ou électronique du milieu résonant à une pulsation égale à une combinaison linéaire des pulsations des première et seconde pulsations.

13. Méthode selon la revendication 12, comprenant l'émission d'un faisceau pompe de pulsation ωp et d'un faisceau Stokes de pulsation ωs, le signal optique non linéaire résultant de l'interaction desdits faisceaux pompe et stokes étant un signal dit signal diffusé CARS, de pulsation ωas = 2ωp - ωs et la différence des premier et second signaux détectés étant caractéristique d'une résonance Raman du milieu résonant.

14. Méthode selon l'une quelconque des revendications 11 à 13, dans laquelle lesdits premier et deuxième signaux optiques non linéaires sont détectés respectivement dans des directions symétriques par rapport à l'axe optique des faisceaux d'excitation incidents, la différence étant effectuée pour chaque couple de signaux ainsi détectés.

15. Méthode selon l'une des revendications 11 à 14, dans laquelle le ou les faisceaux d'excitation subissent un balayage angulaire pour intercepter l'échantillon à différentes positions de l'interface entre le milieu résonant et non résonant.

16. Méthode selon l'une des revendications 11 à 15, dans laquelle l'un au moins des faisceaux d'excitation présente une longueur d'onde d'émission variable, permettant d'obtenir un spectre des résonances vibrationnelles ou électroniques du milieu résonant.

## Patentansprüche

1. Vorrichtung für die Detektion eines induzierten resonanten nichtlinearen optischen Signals, das in einer Probe (805) von der Art mit einem resonanten Medium (61) und einem nichtresonanten Medium (62, 63), welche eine Schnittstelle bilden, wobei die Vorrichtung Folgendes umfasst:
- eine Quelle für die Aussendung (801) mindestens eines ersten Erregungslichtstrahls, der als Pump-Strahl bezeichnet wird, mit einer ersten vorgegebenen Frequenz (ωₚ, welcher für Erregung des resonanten Mediums einer Probe der vorgegebenen Art geeignet ist,
- ein erstes optisches Modul (803), das für die Detektion eines nichtlinearen optischen Signals geeignet ist, das sich aus der Wechselwirkung zwischen Pump-Strahl und Probe ergibt, wenn der Pump-Strahl gemäß einer optischen Achse auf die Probe fällt und die Probe an einer vorgegebenen Stelle einer Transversalschnittstelle zwischen dem resonanten Medium und dem nichtresonanten Medium der Probe trifft
- Mittel (813), um den Pump-Strahl zu reflektieren, welche derart angeordnet sind, dass der derart reflektierte Strahl die Transversalschnittstelle im Wesentlichen an derselben Stelle trifft wie der einfallende Pump-Strahl, durch Folgendes gekennzeichnet:
- ein zweites optisches Modul (806), das für die Detektion des nichtlinearen optischen Signals geeignet ist, das sich aus der Wechselwirkung zwischen reflektiertem Pump-Strahl und Probe ergibt,
- ein Modul (830) für die Verarbeitung der durch das erste und das zweite Detektionsmodul detektierten optischen Signale, umfassend die Berechnung einer Differenz der detektierten Signale, wobei die Differenz für eine Schwingungsresonanz bzw. elektronische Resonanz des resonanten Mediums charakteristisch ist.

2. Vorrichtung nach Anspruch 1, bei der
- die Sendequelle (801) das Aussenden mindestens eines zweiten Strahls zur Erregung des resonanten Mediums mit mindestens einer zweiten Frequenz ωs ermöglicht, die sich von der ersten Frequenz ωp unterscheidet, wobei alle Erregungsstrahlen kolinear sind und angeordnet sind, um die Transversalschnittstelle an der genannten Stelle an einem gemeinsamen Fokussierungsvolumen zu treffen,
- die Reflektiermittel derart angeordnet sind, dass sie alle Erregungsstrahlen an der Transversalschnittstelle an der derselben Stelle auf der Schnittstelle reflektieren,
- die Differenz der von dem ersten und von dem zweiten Detektionsmodul detektierten Signale charakteristisch ist für eine Schwingungsresonanz bzw. elektronische Resonanz des resonanten Mediums mit einer Frequenz, die einer linearen Frequenzkombination der ersten und der zweiten Frequenz entspricht.

3. Vorrichtung nach Anspruch 2, bei der die Sendequelle (801) das Aussenden eines Pump-Strahls mit einer Frequenz ωp und eines Stokes-Strahls mit einer Frequenz ωs ermöglicht, das nichtlineare optische Signal, das sich aus der Wechselwirkung zwischen Pump-Strahl und Stokes-Strahl ergibt, ein so genanntes gestreutes CARS-Signal mit einer Frequenz ωas = 2ωp - ωs ist und die Differenz der von dem ersten und von dem zweiten Detektionsmodul detektierten Signale charakteristisch ist für eine Raman-Resonanz des resonanten Mediums.

4. Vorrichtung nach einem der vorhergehenden Ansprüche, bei der die Reflektiermittel durch einen Reflektierspiegel (813) gebildet sind, der es ermöglicht, den bzw. die Erregungsstrahlen zu reflektieren und das nichtlineare optische Signal zu übertragen.

5. Vorrichtung nach Anspruch 4, bei der der Reflektierspiegel (813) sphärisch ist.

6. Vorrichtung nach einem der vorhergehenden Ansprüche, umfassend ferner:
- ein Objektiv (807), um den bzw. die einfallenden Erregungsstrahlen zu einem gemeinsamen Fokussierungsvolumen (71) zu fokussieren, wodurch die Schnittstelle zwischen resonantem Medium und nichtresonantem Medium geschnitten werden kann, und
- ein Objektiv zur Erfassung des nichtlinearen Signals, das sich aus der Wechselwirkung zwischen einfallenden Erregungsstrahlen und Probe ergibt, wobei das Erfassungsobjektiv identisch ist mit dem Objektiv zur Fokussierung des einfallenden Strahlen, und
- wobei das Erfassungsobjektiv ein Objektiv bildet, um die reflektierten Erregungsstrahlen zu fokussieren, und das Objektiv zum Fokussieren der einfallenden Strahlen ein Objektiv zur Erfassung des nichtlinearen Signals bildet, das sich aus der Wechselwirkung zwischen reflektierten Erregungsstrahlen und Probe ergibt.

7. Vorrichtung nach einem der vorhergehenden Ansprüche, umfassend ferner ein Blatt zur dichroitischen Trennung (804), mit dem der bzw. die von der Sendequelle (801) ausgesendeten Erregungsstrahlen an die Probe gesendet werden können und das nichtlineare optische Signal, das sich aus der Wechselwirkung zwischen dem bzw. den reflektierten Erregungsstrahlen und der Probe ergibt, durchgelassen werden kann.

8. Vorrichtung nach einem beliebigen der vorhergehenden Ansprüche, bei der jedes der optischen Detektionsmodule eine Vorrichtung für die Aufnahme von Bildern umfasst, wobei das nichtlineare optische Signal in jedem der optischen Detektionsmodule jeweils in Richtungen erfasst wird, die in Bezug auf die optische Achse symmetrisch sind, wobei die Differenz für jedes Paar derart detektierter Signale ermittelt wird.

9. Vorrichtung nach einem beliebigen der vorhergehenden Ansprüche, umfassend ferner eine Vorrichtung für die Winkelabtastung des bzw. der Erregungsstrahlen, wodurch der bzw. die Erregungsstrahlen die Probe an unterschiedlichen Stellen der Schnittstelle zwischen dem resonanten Medium und dem nichtresonanten Medium treffen können.

10. Vorrichtung nach einem der vorhergehenden Ansprüche, bei der die Sendequelle mindestens einen Erregungsstrahl mit variabler Wellenlänge aussendet, wodurch ein Spektrum der Schwingungsresonanzen bzw. der elektronischen Resonanzen des resonanten Mediums erhältlich ist.

11. Verfahren für die Detektion eines resonanten nichtlinearen optischen Signals, das in einer Probe (805) induziert wird, wobei die Probe ein resonantes Medium (61) und ein nichtresonantes Medium (62, 63) aufweist, welche eine Schnittstelle bilden, wobei das Verfahren Folgendes umfasst:
- das Aussenden mindestens eines ersten Lichtstrahls zum Erregen des resonanten Mediums, welcher als Pump-Strahl bezeichnet wird, mit einer ersten vorgegebenen Frequenz ωp, wobei der Pump-Strahl gemäß einer optischen Achse auf die Probe fällt und die Probe an einer vorgegebenen Stelle einer Transversalschnittstelle zwischen dem resonanten Medium und dem nichtresonanten Medium trifft,
- die Detektion eines ersten nichtlinearen optischen Signals, das sich aus der Wechselwirkung zwischen Erregungsstrahl(en) und Probe ergibt,
- das Reflektieren des bzw. der Erregungsstrahlen, wobei der bzw. die derart reflektierten Erregungsstrahlen die Transversalschnittstelle im Wesentlichen an derselben Stelle treffen wie der bzw. die einfallenden Erregungsstrahlen,
- die Detektion eines zweiten nichtlinearen optischen Signals, das sich aus der Wechselwirkung zwischen reflektiertem Erregungsstrahl bzw. reflektierten Erregungsstrahlen und Probe ergibt,
- die Verarbeitung des ersten und des zweiten detektierten optischen Signals, umfassend die Berechnung einer Differenz der detektierten Signale, wobei die Differenz für eine Schwingungsresonanz bzw. elektronische Resonanz des resonanten Mediums charakteristisch ist.

12. Verfahren nach Anspruch 11, umfassend:
- das Aussenden mindestens eines zweiten Strahls zur Erregung des resonanten Mediums mit mindestens einer zweiten Frequenz ωs, die sich von der ersten Frequenz ωp unterscheidet, wobei alle Erregungsstrahlen kolinear sind und die Transversalschnittstelle an der genannten Stelle an einem gemeinsamen Fokussierungsvolumen treffen,
- wobei die Differenz des ersten und des zweiten detektierten Signals charakteristisch ist für eine Schwingungsresonanz bzw. elektronische Resonanz des resonanten Mediums mit einer Frequenz, die einer linearen Frequenzkombination der ersten und der zweiten Frequenz entspricht.

13. Verfahren nach Anspruch 12, umfassend das Aussenden eines Pump-Strahls mit einer Frequenz ωp und eines Stokes-Strahls mit einer Frequenz ωs, wobei das nichtlineare optische Signal, das sich aus der Wechselwirkung zwischen Pump-Strahl und Stokes-Strahl ergibt, ein so genanntes gestreutes CARS-Signal mit einer Frequenz ωas = 2ωp - ωs ist und die Differenz des ersten und des zweiten detektierten Signals charakteristisch ist für eine Raman-Resonanz des resonanten Mediums.

14. Verfahren nach einem beliebigen der Ansprüche 11 bis 13, bei dem das erste und das zweite nichtlineare optische Signal jeweils in Richtungen detektiert werden, die in Bezug auf die optische Achse der einfallenden Erregungsstrahlen symmetrisch sind, wobei die Differenz für jedes Paar derart detektierter Signale ermittelt wird.

15. Verfahren nach einem der Ansprüche 11 bis 14, bei dem der bzw. die Erregungsstrahlen einer Winkelabtastung unterzogen werden, so dass die Probe an unterschiedlichen Stellen der Schnittstelle zwischen dem resonanten Medium und dem nichtresonanten Medium geschnitten wird.

16. Verfahren nach einem der Ansprüche 11 bis 15, bei dem mindestens einer der Erregungsstrahlen eine variable Aussendungswellenlänge aufweist, wodurch ein Spektrum der Schwingungsresonanzen bzw. der elektronischen Resonanzen des resonanten Mediums erhältlich ist.

## Claims

1. Device for detecting a resonant nonlinear optical signal induced in a sample (805) of a type comprising a resonant medium (61) and a non-resonant medium (62, 63) forming an interface, the device comprising:
- an emission source (801) of at least one first excitation light beam, called a pump beam, at a first given angular frequency ωₚ, configured for the excitation of a resonant medium of a sample of the given type,
- a first optical module (803) configured for detecting a nonlinear optical signal resulting from the interaction of said pump beam with the sample when said pump beam is incident on the sample along an optical axis and intercepts the sample at a given position of a transverse interface between the resonant medium and the non-resonant medium of the sample,
- means of reflection (813) of said pump beam, arranged in such a way that said reflected pump beam intercepts said transverse interface substantially at the same position as said incident pump beam, **characterized by**:
- a second optical module (806) configured for detecting the nonlinear optical signal resulting from the interaction of said reflected pump beam with the sample,
- a processing module (830) for processing optical signals detected by said first and second detection modules, comprising the calculation of a difference in detected signals, the difference being characteristic of a vibrational or electronic resonance of the resonant medium.

2. Device according to claim 1, in which
- the emission source (801) allows the emission of at least a second excitation beam for the excitation of the resonant medium, at at least a second angular frequency ωs different from the first angular frequency ωp, all of the excitation beams being collinear, arranged so as to intercept said transverse interface at said position in a common focal volume,
- the means of reflection are arranged in such a way as to reflect all the excitation beams on said transverse interface, at the same position on the interface,
- the difference in the signals detected by the first and second detection module is characteristic of a vibrational or electronic resonance of the resonant medium at an angular frequency equal to a linear combination of the angular frequencies of the first and second angular frequencies.

3. Device according to claim 2, in which the emission source (801) allows the emission of a pump beam of angular frequency ωp and a Stokes beam of angular frequency ωs, the nonlinear optical signal resulting from the interaction of said pump and Stokes beams is a signal called CARS scattered signal, of angular frequency ωas = 2ωp - ωs and the difference in signals detected by the first and second detection module is characteristic of a Raman resonance of the resonant medium.

4. Device according to any one of the preceding claims, in which the means of reflection are formed by a reflecting mirror (813) allowing the excitation beam or beams to be reflected and to transmit said nonlinear optical signal.

5. Device according to claim 4, in which the reflecting mirror (813) is spherical.

6. Device according to any one of the preceding claims, also comprising
- a focusing lens (807) for focusing said incident excitation beam or beams in a common focal volume (71), allowing said interface between the resonant medium and the non-resonant medium to be intercepted and
- a collecting lens for collecting the nonlinear signal resulting from the interaction of the incident excitation beams with the sample, said collecting lens being identical to the focusing lens of the incident beams and
- said collecting lens forming a focusing lens for focusing the reflected excitation beams and said focusing lens for focusing incident beams forming a collecting lens for collecting the nonlinear signal resulting from the interaction of the reflected excitation beams with the sample.

7. Device according to any one of the preceding claims, also comprising a dichroic beamsplitter (804) allowing the excitation beam or beams emitted by the emission source (801) to be directed towards the sample and allowing the nonlinear optical signal resulting from the interaction of the reflected excitation beam or beams with the sample to pass.

8. Device according to any one of the preceding claims, in which each of the optical detection modules comprises an image recording device, the nonlinear optical signal being collected in each of the optical detection modules respectively in symmetrical directions about the optical axis, the difference being effected for each signal couple thus detected.

9. Device according to any one of the preceding claims, also comprising a device providing an angular scan of the excitation beam or beams, allowing the excitation beam or beams to intercept the sample at different positions of the interface between the resonant and non-resonant medium.

10. Device according to any one of the preceding claims, in which the emission source emits at least one variable wavelength excitation beam, allowing a spectrum of vibrational or electronic resonances of the resonant medium to be obtained.

11. Method for detecting a resonant non-linear optical signal induced in a sample (805), the sample comprising a resonant medium (61) and a non-resonant medium (62, 63) forming an interface, the method comprising:
- the emission of at least one first excitation light beam of the resonant medium, called a pump beam, at a first given angular frequency ωₚ, said pump beam being incident on the sample along an optical axis, and intercepting the sample at a given position of a transverse interface between the resonant and non-resonant medium,
- the detection of a first nonlinear optical signal resulting from the interaction of said excitation beam or beams with the sample,
- the reflection of said excitation beam or beams, the excitation beam or beams thus reflected intercepting said transverse interface substantially at the same position as the incident excitation beam or beams,
- the detection of a second nonlinear optical signal resulting from the interaction of said reflected excitation beam or beams with the sample,
- the processing of the first and second detected optical signals, comprising the calculation of a difference between the detected signals, the difference being characteristic of a vibrational or electronic resonance of the resonant medium.

12. Method according to claim 11, comprising
- the emission of at least one second excitation beam of the resonant medium, at at least a second angular frequency ωs different from the first angular frequency ωp, all of the excitation beams being collinear, and intercepting said transverse interface at said position in a common focal volume,
- the difference in the first and second detected signals being characteristic of a vibrational or electronic resonance of the resonant medium at an angular frequency equal to a linear combination of the angular frequencies of the first and second angular frequencies.

13. Method according to claim 12, comprising the emission of a pump beam of angular frequency ωp and a Stokes beam of angular frequency ωs, the nonlinear optical signal resulting from the interaction of said pump and Stokes beams being a signal called a CARS scattered signal, of angular frequency ωas = 2ωp - ωs and the difference in the first and second detected signals being characteristic of a Raman resonance of the resonant medium.

14. Method according to any one of claims 11 to 13, in which said first and second nonlinear optical signals are detected respectively in directions symmetrical about the optical axis of the incident excitation beams, the difference being effected for each signal couple thus detected.

15. Method according to any one of claims 11 to 14, in which the excitation beam or beams are subject to an angular scan to intercept the sample at various positions of the interface between the resonant and non-resonant medium.

16. Method according to any one of claims 11 to 15, in which at least one of the excitation beams has a variable emission wavelength, allowing a spectrum of vibrational or electronic resonances of the resonant medium to be obtained.
